# EUROPÄISCHE PATENTANMELDUNG

(11) **EP 1 074 446 A1**
(43) Veröffentlichungstag der Anmeldung: **07.02.2001**
(21) Anmeldenummer: 00115524.1
(22) Anmeldetag: 19.07.2000
(51) Int. Cl.: B61D 3/18, B61K 13/00, H04M 1/62

(54) **Einrichtung zur Anordnung von Lautsprechern einer Lautsprecheranlage an Regenfällen ausgesetzten, ebenen Plattformen, insbesondere Eisenbahn-Flachwaggons zum Transport von Kraftfahrzeugen**

(30) Priorität: 06.08.1999 DE 19937248
(71) Anmelder: Neumann Elektronik GmbH, D-45478 Mülheim (DE)
(72) Erfinder: Kirschbaum, Rudolf Peter, 45478 Mülheim an der Ruhr (DE)
(74) Vertreter: Feder, Wolf-Dietrich, Dr. Dipl.-Phys.

(57) **Zusammenfassung**

Eine Einrichtung zur Anordnung von Lautsprechern einer Lautsprechanlage an Regenfällen ausgesetzten ebenen Plattformen, insbesondere Eisenbahn-Flachwaggons zum Transport von Kraftfahrzeugen, oder Plätzen, die mit einem Wasserablaufsystem versehen sind, welches unter der Oberfläche der Plattform oder des Platzes liegende, sich zur Oberfläche hin öffnende Schächte oder Durchbrüche aufweist. Im Bereich mindestens eines Schachtes oder Durchbruchs ist unterhalb der Oberfläche der Plattform (1) ein wannenartiges Lautsprecheraufnahmegehäuse (4) angeordnet, das zwei in horizontaler Richtung nebeneinander angeordnete Teilräume (4.1, 4.2) aufweist, von denen ein erster Teilraum (4.1) an seiner Oberseite mindestens eine sich zur Oberfläche hin öffnende Schallaustritts-Wassereintrittsöffnung (6.1) und an seiner Unterseite mindestens eine Wasserausrittsöffnung (6.2) besitzt, während der zweite Teilraum (4.2) allseitig wasserdicht abgeschlossen ist und an seiner dem ersten Teilraum zugewandten Wand (5) eine wasserabweisende oder wasserableitende Schalldurchtrittsöffnung besitzt und innerhalb des zweiten Teilraums (4.2) ein Lautsprecher (7) angeordnet ist, der über eine wasserdicht aus dem Gehäuse (4) herausgeführte Anschlußleitung (7.1) an die Lautsprechanlage angeschlossen ist.

## Beschreibung

Die Erfindung betrifft eine Einrichtung zur Anordnung von Lautsprechern einer Lautsprechanlage an Regenfällen ausgesetzten ebenen Plattformen, insbesondere Eisenbahn-Flachwaggons zum Transport von Kraftfahrzeugen oder Plätzen, die mit einem Wasserablaufsystem versehen sind, welches unter der Oberfläche der Plattform oder des Platzes liegende, sich zur Oberfläche hin öffnende Schächte oder Durchbrüche aufweist.

Bei Eisenbahn-Flachwaggons zum Transport von Kraftfahrzeugen tritt das Problem auf, daß beim Auffahren der Kraftfahrzeuge auf den Flachwaggon und auch noch später eine Verständigung zwischen dem Bahnpersonal und den Insassen, insbesondere den Fahrern der Kraftfahrzeuge erwünscht ist. Auch während der Fahrt, bei der die Insassen häufig in den Kraftfahrzeugen bleiben, sollen vom Zugpersonal Durchsagen abgegeben werden, die in den Kraftfahrzeugen verstanden werden müssen. Die Anordnung von Lautsprechern einer Lautsprechanlage an derartigen Flachwaggons ist mit Schwierigkeiten verbunden, wenn die Waggons keine oder nur geringe Aufbauten haben oder aus anderen Gründen an vorhandenen Aufbauten keine Lautsprecher befestigt werden können oder sollen.

Ähnliche Probleme wie bei Eisenbahn-Flachwaggons treten hinsichtlich der Anordnung von Lautsprechern auch bei anderen ebenen Plattformen oder Plätzen auf, wie beispielsweise auf Fährschiffen, Container-Schubschiffen, Großparkplätzen oder dergleichen.

Der Erfindung liegt die Aufgabe zugrunde, eine Einrichtung zur Anordnung von Lautsprechern einer Lautsprechanlage an Regenfällen ausgesetzten ebenen Plattformen, insbesondere Eisenbahn-Flachwaggons zum Transport von Kraftfahrzeugen oder Plätzen zu schaffen, mit der eine Montage der Lautsprecher unterhalb der Oberfläche der Plattform oder des Platzes möglich ist, wobei dafür gesorgt sein muß, daß einerseits eine gute Schallabstrahlung in den Bereich oberhalb der Oberfläche erfolgt und andererseits die Lautsprecher durch das sich bei Regenfällen auf der Oberfläche der Plattform oder des Platzes sammelnde Regenwasser die Funktionsfähigkeit der Lautsprecher nicht beeinträchtigt wird. Dabei wird vorausgesetzt, daß die Plattform oder der Platz mit einem Wasserablaufsystem versehen ist, welches unter der Oberfläche der Plattform oder des Platzes liegende, sich zur Oberfläche hin öffnende Schächte oder Durchbrüche aufweist.

Die Lösung dieser Aufgabe erfolgt erfindungsgemäß mit den Merkmalen aus dem kennzeichnenden Teil des Patentanspruchs 1. Vorteilhafte Weiterbildungen der Erfindung sind in den abhängigen Ansprüchen beschrieben.

Der Grundgedanke der Erfindung besteht darin, die Schächte oder Durchbrüche des Wasserablaufsystems zur Montage von Lautsprechern zu benutzen, wobei die sich zur Oberfläche der Plattform oder des Platzes hin öffnenden Wassereintrittsöffnungen gleichzeitig als Schallaustrittsöffnungen verwendet werden. Durch die besondere Ausbildung des unterhalb der Oberfläche der Plattform oder des Platzes montierten wannenartigen Lautsprecheraufnahmegehäuses wird erreicht, daß einerseits der Ablauf des Wassers nicht behindert wird und andererseits der Schalldurchgang vom Lautsprecher an die Oberfläche der Plattform oder des Platzes ebenfalls nicht behindert wird. Weiterhin ist der Wasserabfluß durch den ersten Teilraum des Lautsprecheraufnahmegehäuses derart geführt, daß das Wasser nicht in den zweiten Teilraum gelangen kann, in welchem der Lautsprecher angeordnet ist. Hierbei ist ein zwischen den beiden Teilräumen angeordnetes Dichtungselement von Bedeutung, welches einerseits schalldurchlässig ausgebildet ist, aber andererseits den dahinter angeordneten Lautsprecher vor Spritzwasser schützt.

Die erfindungsgemäße Einrichtung ist überall mit Erfolg einsetzbar, wo eine Regenfällen ausgesetzte ebene Plattform oder ein Platz mit einem Wasserablaufsystem versehen ist und eine Übertragung von Lautsprecherdurchsagen erwünscht ist, aber keine Befestigungsmöglichkeiten für obererdige Lautsprecher vorhanden sind. Die Einrichtung kann auch dort von Nutzen sein, wo Lautsprecher diebstahl- oder vandalismusgefährdet sind und daher unterhalb der Oberfläche der Plattform oder des Platzes angeordnet werden sollen.

Die erfindungsgemäße Einrichtung ist auch an Eisenbahnwaggons zur Containerbeladung von Vorteil, da sich auch beim Be- und Entladen Bedienungspersonal im Wagenbereich aufhält, um die Container zu sichern. Der Führer des Ladekrans hat dann die Möglichkeit, das Bedienpersonal direkt anzusprechen.

Im folgenden wird anhand der beigefügten Zeichnungen ein Ausführungsbeispiel für eine Einrichtung nach der Erfindung näher erläutert.

In den Zeichnungen zeigen:
Fig. 1 einen Teilschnitt durch eine Plattform eines Eisenbahn-Flachwaggons im Bereich einer Wasserablauföffnung mit einem darunter montierten Lautsprecher;
Fig. 1A einen Schnitt nach der Linie A-A in Fig. 1;
Fig. 1B einen Schnitt nach der Linie A-A ohne Lautsprecher und Lautsprecherabdeckung;
Fig. 1C eine Ansicht der Einrichtung nach Fig. 1 von oben mit in Richtung der Längsachse aufgeschnittener Abdeckplatte;
Fig. 2 in gegenüber Fig. 1 vergrößerter Darstellung die Ausbildung des Dichtungselements zwischen den beiden Teilräumen des Lautsprecheraufnahmegehäuses nach Fig. 1;
Fig. 3 in stark verkleinerter schematisierter Darstellung einen Eisenbahn-Flachwaggon mit darauf angeordnetem Lkw und einer Lautsprecheranlage unterhalb des Wagenbodens.

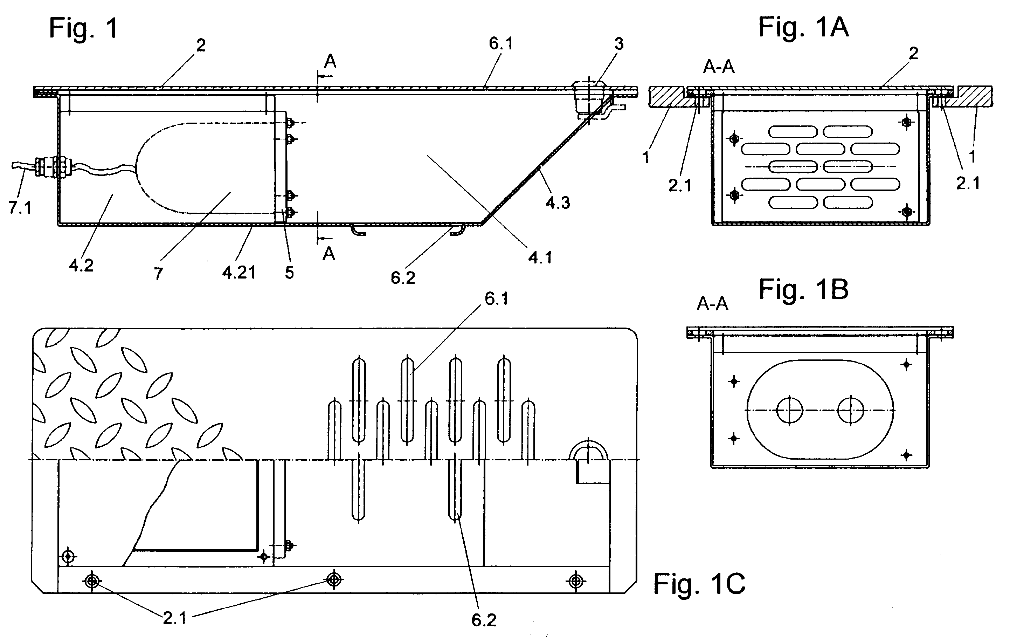

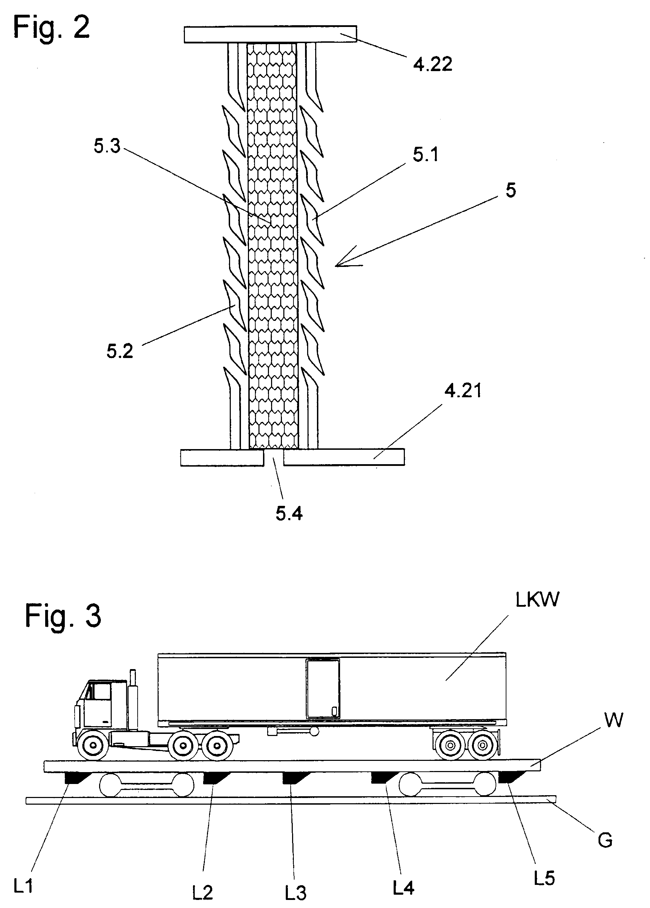

Die Fig. 1 bis 1C zeigen einen Teil des Wagenbodens 1 eines im übrigen nicht dargestellten Eisenbahn-Flachwaggons im Bereich einer Öffnung des Wasserablaufsystems. Dieses Wasserablaufsystem besitzt einen Durchbruch im Wagenboden 1, in dem ein wannenartiges Lautsprecheraufnahmegehäuse 4 befestigt ist. Dieses wannenartige Lautsprecheraufnahmegehäuse 4 ist über Schrauben 2.1 am Wagenboden 1 befestigt und ist an seiner Oberseite mit einer schwenkbaren Abdeckplatte 2 versehen. Die Abdeckplatte ist einseitig mit dem Lautsprecheraufnahmegehäuse 4 über ein Scharnier verbunden und an der gegenüberliegenden Seite mittels eines Schlosses 3 abschließbar. Der Gesamtinnenraum des Lautsprecheraufnahmegehäuses 4 ist in zwei Teilräume aufgeteilt, wobei ein erster Teilraum 4.1 an seiner Oberseite mit sich zur Oberfläche des Wagenbodens 1 hin Öffnenden SchallaustrittsWassereintrittsöffnungen 6.1 und an seiner Unterseite mit Wasseraustrittsöffnungen 6.2 versehen ist. Der zweite Teilraum 4.2 innerhalb des Innenraums des Lautsprecheraufnahmegehäuses 4 liegt innerhalb eines allseitig wasserdicht abgeschlossenen Innengehäuses, das einen Lautsprecher 7 aufnimmt, der über eine wasserdicht aus dem Innengehäuse und dem Lautsprecheraufnahmegehäuse 4 herausgeführte Zuleitung 7.1 an die übrigen Teile der Lautsprecheranlage angeschlossen ist. Der zweite Teilraum 4.2 besitzt an seiner dem ersten Teilraum 4.1 zugewandten Seite eine Wand 5. Die beiden Teilräume 4.1 und 4.2 liegen in horizontaler Richtung nebeneinander und die der Wand 5 gegenüberliegende Innenwand 4.3 des ersten Teilraums 4.1 ist als zu den Schallaustntts-Wassereintrittsöffnungen 6.1 hinlaufende Schallführung ausgebildet. Im dargestellten Ausführungsbeispiel liegt der Lautsprecher 7 horizontal im Teilraum 4.2 direkt hinter der Wand 5. Weiterhin ist im dargestellten Ausführungsbeispiel die Wand 5 insgesamt als Dichtungselement ausgebildet, das in Fig. 2 genauer dargestellt ist. Das Dichtungselement 5 besitzt zwei Bleche 5.1 und 5.2 als Außenwände, die aus Streckmetall bestehen und zwischen denen eine mehrlagige Matte 5.3 aus doppeltgewebten Kunststoffäden angeordnet ist, welche die Eigenschaft hat, Schall gut durchzulassen aber Spritzwasser aufzuhalten und nach unten durch eine Wasseraustrittsöffnung 5.4 ausfließen zu lassen. Derartige mehrlagige Matten sind an sich in der Anwendung bei Lautsprechern als Spritzschutz bekannt und beispielsweise unter der Handelsbezeichnung "Saran®" erhältlich. Selbstverständlich ist es auch möglich, eine feste Trennwand vorzusehen, in der sich eine Öffnung befindet, die mittels eines derartigen Dichtungselements verschlossen ist und hinter der der Lautsprecher angeordnet ist.

Fig. 3 zeigt beispielsweise die Anordnung eines aus mehreren Lautsprechern bestehenden Systems an einem Eisenbahn-Flachwaggon.

Auf dem auf einem Gleis G stehenden Waggon W ist ein größerer Lastkraftwagen LKW stationiert, während an der Unterseite des Waggons W Lautsprecher L1, L2, L3, L4 und L5 in der oben beschriebenen Weise angeordnet sind. An der gegenüberliegenden Seite des Waggons kann sich ebenfalls eine Reihe derartiger Lautsprecher befinden und die Lautsprecher können in nicht eigens dargestellter Weise auch in Längsrichtung des Waggons W gegeneinander versetzt angeordnet sein.

## Patentansprüche

1. Einrichtung zur Anordnung von Lautsprechern einer Lautsprechanlage an Regenfällen ausgesetzten ebenen Plattformen, insbesondere Eisenbahn-Flachwaggons zum Transport von Kraftfahrzeugen, oder Plätzen, die mit einem Wasserablaufsystem versehen sind, welches unter der Oberfläche der Plattform oder des Platzes liegende, sich zur Oberfläche hin öffnende Schächte oder Durchbrüche aufweist, dadurch gekennzeichnet, daß im Bereich mindestens eines Schachtes oder Durchbruchs unterhalb der Oberfläche der Plattform (1) oder des Platzes ein wannenartiges Lautsprecheraufnahmegehäuse (4) angeordnet ist, dessen Innenraum zwei in horizontaler Richtung nebeneinander angeordnete Teilräume (4.1, 4.2) aufweist, von denen ein erster Teilraum (4.1) an seiner Oberseite mindestens eine sich zur Oberfläche hin öffnende Schallaustritts-Wasserein-trittsöffnung (6.1) und an seiner Unterseite mindestens eine Wasseraustrittsöffnung (6.2) besitzt, während der zweite Teilraum (4.2) allseitig wasserdicht abgeschlossen ist und an seiner dem ersten Teilraum zugewandten Wand (5) eine wasserabweisende bzw. wasserableitende Schalldurchtrittsöffnung besitzt und innerhalb des zweiten Teilraums ein Lautsprecher (7) angeordnet ist, der über eine wasserdicht, aus dem Gehäuse (4) herausgeführte Anschlußleitung (7.1) an die Lautsprechanlage angeschlossen ist.

2. Einrichtung nach Anspruch 1, dadurch gekennzeichnet, daß der zweite Teilraum (4.2) sich in einem innerhalb des Lautsprecheraufnahmegehäuses (4) angeordneten allseitig wasserdicht abgeschlossenen Innengehäuse befindet, in dem der Lautsprecher (7) angeordnet ist.

3. Einrichtung nach Anspruch 1, daß zur Bildung des ersten und zweiten Teilraums der Innenraum des Lautsprecheraufnahmegehäuses durch eine wasserdicht eingesetzte Trennwand in einen ersten Innenraum, der dem ersten Teilraum entspricht, und einem zweiten Teilraum, der dem zweiten Teilraum entspricht, aufgeteilt ist und in der Trennwand die Schalldurchtrittsöffnung angeordnet ist.

4. Einrichtung nach einem der Ansprüche 1 bis 3, dadurch gekennzeichnet, daß mindestens eine der der Wand (5) zwischen dem ersten und dem zweiten Teilraum gegenüberliegenden Innenwände des ersten Teilraums (4.1) als Schallführung (4.3) zur Schallaustritts-Wassereintrittsöffnung (6.1) hin ausgebildet ist.

5. Einrichtung nach einem der Ansprüche 1 bis 4, dadurch gekennzeichnet, daß der Lautsprecher (7) im zweiten Teilraum (4.2) in horizontaler Richtung abstrahlend unmittelbar an die wasserabweisende, bzw. wasserableitende Schalldurchtrittsöffnung angeschlossen ist.

6. Einrichtung nach einem der Ansprüche 1 bis 5, dadurch gekennzeichnet, daß die wasserabweisende bzw. wasserableitende Schalldurchtrittsöff nung mit einem Dichtungselement (5) abgeschlossen ist, das zwischen zwei Blechen (5.1, 5.2) aus Streckmetall eine mehrlagige Matte (5.3) aus doppelgewebten Kunststoffäden aufweist.

7. Einrichtung nach Anspruch 6, dadurch gekennzeichnet, daß an der Unterseite des Dichtungselements (5) zwischen den Blechen (5.1, 5.2) ein Wasserablauf (5.4) angeordnet ist.

8. Einrichtung nach einem der Ansprüche 1 bis 7, dadurch gekennzeichnet, daß die Wassereintritts-Schallaustrittsöffnung durch ein Gitter mit mindestens zwei Lagen von sich jeweils überlappenden Gitterstäben abgedeckt ist.

9. Einrichtung nach Anspruch 8, dadurch gekennzeichnet, daß das Gitter abnehmbar oder hochklappbar ist.

10. Einrichtung nach einem der Ansprüche 1 bis 7, dadurch gekennzeichnet, daß das Lautsprecheraufnahmegehäuse (4) an seiner Oberseite mit einer schwenkbaren Deckplatte (2) versehen ist, in welcher im Bereich des ersten Teilraums (4.1) Schallaustritts-Wassereintrittsöffnungen (6.1) angeordnet sind.

11. Einrichtung nach Anspruch 10, dadurch gekennzeichnet, daß die Abdeckplatte (2) mittels eines Schlosses (3) abschließbar ist.

12. Einrichtung nach einem der Ansprüche 1 bis 11, dadurch gekennzeichnet, daß bei einem Eisenbahn-Flachwaggons, bei dem das Lautsprecheraufnahmegehäuse die Unterseite des Wagenbodens überragt, unterhalb des Lautsprecheraufnahmegehäuses mindestens ein Schutzbügel auf Auffahrschutz angeordnet ist.

13. Einrichtung nach einem der Ansprüche 1 bis 12, dadurch gekennzeichnet, daß bei einem Eisenbahn-Flachwaggon (W) zum Transport von Kraftfahrzeugen, insbesondere Lastkraftwagen (LKW) mindestens an den beiden Enden des Waggons (W) mindestens ein Lautsprecher (L1, L5) gemäß den Merkmalen nach einem der Ansprüche 1 bis 9 angeordnet ist.

14. Einrichtung nach Anspruch 13, dadurch gekennzeichnet, daß die Lautsprecher am Wagen in zwei in Längsrichtung verlaufenden Reihen gegeneinander versetzt angeordnet sind.
